Europäisches Patentamt

European Patent Office

Office européen des brevets

(11) Veröffentlichungsnummer: **0 100 299
B1**

(12) **EUROPÄISCHE PATENTSCHRIFT**

(45) Veröffentlichungstag der Patentschrift:
**17.09.86**

(21) Anmeldenummer: **83810320.8**

(22) Anmeldetag: **15.07.83**

(51) Int. Cl.⁴: **C 01 B 3/04, B 01 J 27/02**

(54) Verfahren zur Produktion von Wasserstoff mittels heterogener Photoredoxkatalyse und dabei einsetzbare neue Katalysatoren.

(30) Priorität: **21.07.82 CH 4449/82**

(43) Veröffentlichungstag der Anmeldung:
**08.02.84 Patentblatt 84/6**

(45) Bekanntmachung des Hinweises auf die Patenterteilung:
**17.09.86 Patentblatt 86/38**

(84) Benannte Vertragsstaaten:
**CH DE FR GB IT LI**

(56) Entgegenhaltungen:
**EP - A - 0 058 136
US - A - 3 969 495
US - A - 4 094 751**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Reber, Jean-François, Dr., Gstaltenrainweg 69, CH-4125 Riehen (CH)**
Erfinder: **Bühler, Niklaus, Dr., Route du Pâquier 8, CH-1723 Marly (CH)**
Erfinder: **Meier, Kurt, Dr., Ulmenstrasse 11, CH-4123 Allschwil (CH)**
Erfinder: **Rusek, Milos, Tiefengrabenstrasse 49, CH-4102 Binningen (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft ein Verfahren zur Produktion von Wasserstoff mittels heterogener Photoredoxkatalyse, dabei einsetzbare neue Katalysatoren und Verfahren zu deren Herstellung.

Aus der Literatur ist bekannt, dass in Gegenwart von mit Rutheniumdioxid beschichtetem Cadmiumsulfidpulver oder kolloidalem Cadmiumsulfid unter Lichteinwirkung aus $H_2S$ oder $Na_2S$ bzw. Sulfidionen enthaltenden wässrigen Suspensionen Wasserstoff und Schwefel produziert werden, können [vgl. z.B. C+EN, 59 (30), 40 (1981) und Helv. Chim. Acta, 65, 243 (1982)]. Aus der U.S. Patentschrift 4 094 751 ist bekannt, dass unter Verwendung von photochemischen Dioden, die entweder aus zwei mit einem Ohm'schen Kontakt versehenen, geeignet dotierten Halbleitermaterialien mit entgegengesetzter Leitfähigkeit oder aus einem mit einem Ohm'schen Kontakt versehenen, geeignet dotierten Halbleitermaterial und einem Metall bestehen, u.a. Schwefelwasserstoff in Wasserstoff und Schwefel zerlegt werden kann. Mit Platin beschichtetes Cadmiumsulfid wurde auch schon für die Photoelektrolyse von Wasser in Wasserstoff und Sauerstoff verwendet. Dabei muss das unter Lichteinwirkung instabile Cadmiumsulfid durch Zugabe geeigneter Reduktionsmittel, wie Äthylendiamintetraessigsäure (EDTA) oder Cystein, stabilisiert werden. Das EDTA bzw. Cystein werden dabei irreversibel oxidiert [vgl. z.B. J. Phys. Chem., 85, 4026 (1981), J.C.S. Chem. Comm., 145(1981), J. Chem. Soc. Faraday Trans., 2, 77, 1703 (1981)]. Die Photokorrosion von CdS in wässrigen Systemen kann auch durch ultradünne Beschichtung von platinisierten CdS-Partikeln mit Rutheniumdioxid unterdrückt werden [vgl. z.B. Angew. Chem., 93, 1012 (1981) und Helv. Chim. Acta, 64, 362 (1981)]. Die Stabilität und Effizienz dieser vorbekannten Systeme lassen jedoch zu wünschen übrig. Aus der EP-Patentschrift 0 058 136 ist ferner bekannt, dass Wasserstoff unter Einwirkung von Licht auf ein metallbeschichtetes Cadmiumsulfid-, Cadmiumsulfoselenid- oder Titandioxid-Halbleiterpulver in Gegenwart von Alkalimetall-, Erdalkalimetall- oder Ammoniumsulfiten oder -sulfiden erzeugt werden kann. Die Halbleiterpulver in Verbindung mit den Reduktionsmitteln gemäss dem vorliegenden Verfahren werden nicht umfasst.

Gegenstand der Erfindung ist ein Verfahren zur selektiven Produktion von Wasserstoff mittels heterogener Photoredoxkatalyse, indem man in der Suspension eines mit 0,001 bis 10 Gew.-% Cu, Cr, Ni, Co oder einem Edelmetall oder Gemischen davon beschichteten Halbleiterpulver auf ZnS, $Cd_{1-x}Zn_xS$, $Zn_{1-x}Hg_xS$, $Cd_{1-x}Hg_xS$, $Zn_{1-y}Ag_2S$, $Cd_{1-y}Ag_2S$, $Cd_{1-x-y}Ag_2Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $C_dSe_{1-x}Te_x$, $La_2S_3$, $Bi_2S_3$, CdS oder $CdS_{1-x}Se_x$, worin x 0,001 bis 0,99 und y 0,0001 bis 0,20 sind, Gemische aus Wasser und Alkalimetall-, Erdalkalimetall- oder Ammoniumsulfiten, -sulfiden,-hypophosphiten, -phosphiten und/oder den entsprechenden freien Säuren unter Lichteinwirkung zur Reaktion bringt, wobei im Falle von CdS- oder $CdS_{1-x}Se_x$-Halbleiterpulvern Hypophosphite, Phosphite oder die entsprechenden freien Säuren oder Gemische aus den genannten Reduktionsmitteln verwendet werden.

Die Reaktionen können z.B. durch folgende Schemata veranschaulicht werden:

1. $SO_3^{-2} + H_2O - SO_3^{-2} + 2H^+ + 2e^-$ (Oxidation)
   $2H^+ + 2e^- - H_2$                  (Reduktion)

   $SO_3^{-2} + H_2O - SO_4^{-2} + H_2$ (Gesamt-Reaktion)

2. $S^{-2} - S + 2e^-$                  (Oxidation)
   $2H_2O + 2e^- - H_2 + 2OH^-$    (Reduktion)

   $S^{-2} + 2H_2O - H_2 + 2OH^- + S$
                           (Gesamt-Reaktion)

3. $H_2PO_2^- + H_2O \rightarrow H_2PO_3^- + 2H^+ + 2e^-$
                           (Oxidation)
   $2H^+ + 2e^- \rightarrow H_2$           (Reduktion)

   $H_2PO_2^- + H_2O \rightarrow H_2PO_3^- + H_2$
                           (Gesamt-Reaktion)

4. $H_2PO_3^- + H_2O \rightarrow H_2PO_4^- + 2H^+ + 2e^-$
                           (Oxidation)
   $2H^+ + 2e^- \rightarrow H_2$           (Reduktion)

   $H_2PO_3^- + H_2O \rightarrow H_2PO_4^- + H_2$
                           (Gesamt-Reaktion)

5. $S^{-2} + SO_3^{-2} \rightarrow S_2O_3^{-2} + 2e^-$ (Oxidation)
   $2H_2O + 2e^- \rightarrow H_2 + 2OH^-$    (Reduktion)

   $S^{-2} + SO_3^{-2} + 2H_2O \rightarrow H_2 + 2OH^- + S_2O_3^{-2}$
                           (Gesamt-Reaktion)

Das erfindungsgemässe Verfahren zeichnet sich durch seine Einfachheit und gute Effizienz und/oder hohe Stabilität aus, besonders bei Verwendung von Gemischen aus Sulfiden und Sulfiten oder Gemischen aus Sulfiden und Phosphiten, Hypophosphiten, unterphosphoriger oder phosphoriger Säure.

Die einzusetzenden Ausgangsmaterialien sind leicht zugänglich und billig und ermöglichen eine effiziente Wasserstoffproduktion unter stabilen Bedingungen, verbunden mit einem nützlichen und vorteilhaften oxidativen Prozess. Dabei werden z.B. die Alkalimetall-, Erdalkalimetall- oder Ammoniumsulfite zu den ökologisch weniger bedenklichen und gegebenenfalls wiederverwertbaren Sulfaten (z.B. als Gips), die Sulfide zu Schwefel bzw. Polysulfiden, die Hypophosphite zu Phosphiten und die Phosphite zu Phosphaten oxidiert. Die Reduktionsmittel selbst können in an sich bekannter und einfacher Weise aus in grossen Mengen anfallenden Industrieabfällen gewonnen werden, z.B. aus Sulfitablaugen, wie sie in der Papierindustrie anfallen, durch Verwertung des bei der Kohle- und Erdölaufbereitung in grossen Mengen entstehenden Schwefels oder von $SO_2$-haltigen Industrieabgasen, aus Sulfidabwässern in der Küpenfärberei oder aus dem bei Kohlevergasungsprozessen gebildeten Schwefeldioxid. Dieses Schwefeldioxid musste bisher durch besondere Entschwefelungsverfahren aus den Kokereigasen entfernt werden, z.B. nach dem Stretford-Prozess [vgl. Hydrocarbon Processing and Petroleum Refiner, 40, 141–146 (1961)] durch katalytische Reduktion von Schwefeldioxid zu Schwefel, wobei der dabei oxidierte Katalysator wieder regeneriert werden muss. Nach dem sogenannten Katasulf-Prozess [vgl. z.B. Chem. Fabrik II (1/2), 10 (1938) und deutsche Patentschriften 510 488, 576 137 und 634 427] wird das Schwefeldioxid mit dem ebenfalls im Kokereigas vorhandenen Ammoniak zu Ammoniumsulfit umgesetzt. Dieses wird in einem aufwendigen Verfahren mit Hilfe von Schwefelsäure bei erhöhten Temperaturen (ca. 150 °C) zu Ammoniumsulfat (Düngemittel) und Schwefel umgesetzt. Nach dem erfindungsgemässen Verfahren kann Ammoniumsulfit auf bedeutend einfachere Weise in das Ammoniumsulfat übergeführt werden. Bei Verwendung von Gemischen aus Sulfiden und Sulfiten, wie sie bei der Entschwefelung von Kohle und Erdöl entstehen, werden anodisch Thiosulfationen bzw. Thiosulfate gebildet, die für photographische Fixierbäder, z.B. das Natriumthiosulfat, oder in Initiatorsystemen für Polymerisationsreaktionen Verwendung finden. Hypophosphite und Phosphite sowie die entsprechenden Säuren fallen bei verschiedenen chemischen Reaktionen als Nebenprodukte an. Sie können erfindungsgemäss leicht zu Phosphaten (Düngemittel) oxidiert werden.

Zum Suspendieren (Aufschlämmen) der Halbleiterpulver (Katalysatoren) kommen z.B. Wasser, Alkanole mit bis zu 6 C-Atomen, wie Methanol, Äthanol, Propanol, Isopropanol, Butanole und Hexanole, aliphatische und cyclische Äther, wie Diäthyläther, Di-n-isopropyläther, Tetrahydrofuran und Dioxan, Cellosolve oder Gemische von Wasser mit Alkoholen, wie Methanol und Äthanol, oder mit Tetrahydrofuran, Dioxan oder Cellosolve in Betracht. Bevorzugt wird Wasser verwendet.

Setzt man als Reduktionsmittel $H_2S$, $H_2SO_3$ oder ein Gemisch von Sulfiden oder Sulfiten und Hypophosphiten, Phosphiten unterphosphoriger oder phosphoriger Säure ein, so wird die Umsetzung vorzugsweise unter Zusatz einer Base vorgenommen. Als Basen kommen z.B. Ammoniak, Alkalimetall- oder Ammoniumhydroxide, -carbonate, -metasilikate, -phosphate oder -borate in Betracht. Geeignete Alkalimetall- oder Erdalkalimetallsulfide, -sulfite, -hypophosphite oder -phosphite sind das Na-, K-, Li-, Mg-, Ca- und Ba-sulfid, -sulfit, hypophosphit oder -phosphit. Bevorzugt verwendet man ein Alkalimetallsulfit oder -sulfid, Ammoniumsulfit oder -sulfid, ein Alkalimetallhypophosphit oder -phosphit, Ammoniumhypophosphit oder -phosphit, unterphosphorige Säure, phosphorige Säure oder Gemische davon. Besonders bevorzugt verwendet man Gemische aus einem Alkalimetall- oder Ammoniumsulfid und einem Alkalimetall- oder Ammoniumsulfit, Gemische aus einem Alkalimetall- oder Ammoniumsulfid und einem Alkalimetall- oder Ammoniumhypophosphit, oder Gemische aus einem Alkalimetall- oder Ammoniumsulfid, einem Alkalimetall- oder Ammoniumhypophosphit und einer Base. Bevorzugte Basen sind NaOH, KOH, $Na_2CO_3$ und Ammoniak. Als Alkalimetall wird Natrium bevorzugt.

Die Reaktionstemperaturen liegen im allgemeinen zwischen 20 °C und dem Siedepunkt des verwendeten Suspensionsmittels. Bevorzugt arbeitet man bei einer Temperatur zwischen 40 und 80 °C.

Als Edelmetalle kommen z.B. Ru, Os, Rh, Ir, Pd, Pt, Ag oder Au in Betracht. Bevorzugt sind Platin, Rhodium, Nickel, Iridium, Ruthenium, Silber und Palladium oder Gemische davon; besonders bevorzugt ist Platin und eine Platin-Silber-Mischung.

Der Anteil Metall auf dem Halbleiterpulver liegt zweckmässig zwischen 0,001 und 10 Gew.-%, bevorzugt 0,1 und 5 Gew.-%, bezogen auf das Gewicht des Halbleiterpulvers.

Die spezifische Oberfläche der Halbleiterpulver kann innerhalb breiter Grenzen variieren und hängt im wesentlichen von der Art des Halbleiters und/oder der Art des Reduktionsmittels ab. Im allgemeinen liegt sie zwischen 0,01 und 200 $m^2$/g.

Die Metallpartikel auf dem Halbleiterpulver weisen vorzugsweise eine Korngrösse von 10 Å bis 1000 Å auf. Die Halbleiterpulver werden zweckmässig in Mengen von 0,05 bis 5 Gew.-%, bevorzugt 0,4 bis 2,0 Gew.-%, bezogen auf das Reaktionsvolumen (Reaktionspartner + Suspensionsmittel) eingesetzt.

Für die Reaktion mit Gemischen aus Sulfiden und Sulfiten oder Sulfiden und Hypophosphiten, Phosphiten, unterphosphoriger oder phosphoriger Säure werden mindestens teilweise mit Platin, Ruthenium, Rhodium oder einer Platin-Silber-Mischung beschichtetes Cadmiumsulfoselenid und insbesondere Cadmiumsulfid bevorzugt. Im übrigen sind mindestens teilweise mit Platin, Iridium, Ruthenium, Palladium, Rhodium oder Nickel beschichtete ZnS-, $Cd_{1-x}Zn_xS$-, $Cd_{1-x}Hg_xS$- oder $Cd_{1-y}Ag_{2y}S$-, $Cd_{1-x-y}Ag_{2y}Zn_xS$-Halbleiterpulver bevorzugt, wobei x 0,01 bis 0,8 und y 0,001 bis 0,2 sind. Besonders bevorzugt sind mindestens teilweise mit Nickel, Iridium oder Platin beschichtetes ZnS-Halbleiterpulver oder mindestens teilweise mit Platin, Ruthenium oder einer Platin-Silber-Mischung beschichtete $Cd_{1-x}Zn_xS$- oder $Cd_{1-y}Ag_{2y}S$-, $Cd_{1-x-y}Ag_{2y}Zn_xS$-Halbleiterpulver, wobei x 0,01 bis 0,8, besonders 0,05 bis 0,4, und y 0,001 bis 0,2 betragen.

Als Lichtquelle für die erfindungsgemässe Redoxreaktion kann an sich beliebiges Licht eingesetzt werden, dessen Wellenlänge je nach Halbleiter zwischen ca. 200 und 650 nm liegt. Geeignete Lichtquellen sind Sonnenlicht, besonders bei Verwendung definitionsgemässer Cd-haltiger Halbleiter, oder z.B. gegebenenfalls metallatom-dotierte Quecksilberhochdrucklampen, Xenon-dampflampen, Quecksilber-Xenonlampen, Quecksilberniederdruck-, und -mitteldrucklam-pen, Halogenlampen, Wolframlampen oder $D_2$-Lampen. Die Wellenlängen betragen für cadmi-umhaltige Halbleiter bis ca. 650 nm, für zinkhaltige Halbleiter zwischen etwa 350 und 600 nm, für $La_2S_3$ bis ca. 500 nm und für $Bi_2S_3$ bis ca. 650 nm. Die quantitative Bestimmung des bei der Reaktion entwickelten Wasserstoffs kann in an sich bekannter Weise erfolgen, beispielsweise durch Hydrierung geeigneter aromatischer Verbindungen.

Die gebildeten Phosphite, Phosphate, Thiosulfate, Sulfate bzw. Polysulfide oder der Schwefel können in üblicher Weise abgetrennt werden, z.B. durch Ausfällen, gegebenenfalls in Form schwerlöslicher Salze, wie Erdalkalimetallsalze. Der Schwefel kann z.B. durch Ansäuern der Reaktionslösung isoliert werden.

Die erfindungsgemäss einzustzenden beschichteten Halbleiter können beispielsweise wie folgt hergestellt werden:

1. Durch photokatalytische Abscheidung der Metalle auf den Halbleiterpulvern. Dabei werden die Halbleiterpulver, insbesondere Cadmium-Halbleiterpulver oder cadmiumhaltige Halbleiterpulver, zweckmässig unter Zusatz von Säure oder Salzen davon in einer wässrigen Lösung oder Suspension einer geeigneten Metallverbindung oder eines Gemisches geeigneter Metallverbindungen, gegebenenfalls in Gegenwart eines Puffers, wie Natriumacetat, Kaliumacetat oder Natriumformiat, suspendiert (pH vorzugsweise ca. 1,0 bis 9,0) und dann belichtet, bevorzugt bei einer Temperatur zwischen 40 und 60 °C. Dabei ist es von Vorteil für die Beschichtung der Halbleiterpulver Lichtquellen mit einem hohen UV-C-Anteil (vgl. Houben-Weyl, Band Photochemie I, S. 42), z.B. Quecksilberhochdrucklampen, zu verwenden.

Als Säuren eignen sich z.B. Verbindungen der Formel I und II R–COOH (I) und HOOC–R'–COOH (II). Als Salze davon kommen z.B. die entsprechenden Natrium-, Kalium-, Lithium- und Ammoniumsalze in Betracht. Dabei stellt R gerad-kettiges oder verzweigtes $C_{1-8}$-Alkyl, besonders $C_{1-4}$-Alkyl, $C_{3-8}$-Cycloalkyl, $-CH_2X$, $-CHX_2$, $-CX_3$, mit X = Fluor oder Brom und insbesondere Chlor, $-(CH_2)_n-OH$, $-CH_2)_n-O-C_{1-8}$-Alkyl, besonders $-(CH_2)_n-O-C_{1-4}$-Alkyl oder $-(CH_2)_n-O$-Phenyl mit n = 1 bis 8 und insbesondere 1 bis 4, Phenyl, Naphthyl oder Benzyl dar, und R' ist $-C_mH_{2m}-$ mit m = 1 bis 8, besonders 1 bis 6. Als Beispiele solcher Säuren seien genannt: Ameisensäure, Essigsäure, Propionsäure, Buttersäure, Isobuttersäure, 2-Methylbuttersäure, Pivalinsäure, 3,3-Dimethylbuttersäure, Capronsäure, 2-Methylhexansäure, Oenanthsäure, Caprylsäure, Cyclopropancarbon-säure, Cyclopentancarbonsäure, Cyclohexancar-bonsäure, Chloressigsäure, Bromessigsäure, Di-chloressigsäure, Trichloressigsäure, Trifluoressig-säure, Glykolsäure, Methoxy-, Äthoxy-, Isopro-poxy-, n-Butoxy und n-Hexyloxyessigsäure,

Methoxypropionsäure, Äthoxyessigsäure, Me-thoxybuttersäure, Phenoxyessigsäure, Phenoxy-propionsäure, Phenoxybuttersäure, Benzoesäure, Naphthoesäure und Ameisensäurebenzylester; Malonsäure, Bernsteinsäure, Methylmalonsäure, Glutarsäure, Methylbernsteinsäure, Adipinsäure, 2,2-Dimethylbernsteinsäure und Pimelinsäure. Besonders bevorzugt verwendet man Ameisensäure, Choressigsäure oder Glykolsäure und vor allem Essigsäure.

2. Durch elektrolytische Abscheidung der Metalle auf den Halbleiterpulvern gemäss dem in J. Phys. Chem. 84, 1705 (1980) beschriebenen Verfahren.

3. Durch hydrogenolytische Abscheidung der Metalle auf den Halbleiterpulvern. Dabei wird das Halbleiterpulver zweckmässig mit einer wässrigen Lösung einer geeigneten Metallverbindung oder eines Gemisches geeigneter Metallverbindungen imprägniert, gegebenenfalls unter Zusatz von Säure, und dann bei erhöhter Temperatur, vorzugsweise zwischen 60 und 160 °C, getrocknet, worauf man die Metallverbindung mit $H_2$ redu-ziert. Die Reduktion wird bevorzugt bei Temperaturen zwischen 150 und 400 °C vorgenommen. Als Säuren können sowohl anorganische als auch organische Säuren, z.B. organische Säuren der unter 1) genannten Art, verwendet werden. Be-vorzugt sind HCl und Essigsäure.

4. Durch reduktive Kolloidherstellung, z.B. gemäss dem in Angew. Chem., 92, 663 (1980) beschriebenen Verfahren. Dabei wird zuerst die Metallverbindung reduziert und dann mit dem Halbleiterpulver vermischt.

5. Durch Bedampfen der Halbleiterpulver mit den Metallen, besonders Bedampfen der Pulver mit Platin, ab hochschmelzenden, erhitzten Metalldrähten, besonders Wolfram-, Tantal-, Niob- oder Osmiumdrähten, z.B. bei 10 V/60 Amp.

6. Durch UV-Bestrahlung einer wässrigen Suspension des Halbleiterpulvers und einer Metall-verbindung, bevorzugt mit einer Quecksilber-hochdrucklampe bei Temperaturen zwischen 40 und 80 °C oder andernLampen mit hohen UV-C-Anteilen.

Die oben erwähnten Verfahren können zur Abscheidung verschiedener Metalle auf das gleiche Halbleiterpulver verwendet werden, wobei die verschiedenen Methoden in an sich beliebiger Reihenfolge hintereinander angewendet werden können. So können die verschiedenen Metalle gleichzeitig z.B. photokatalytisch, elektrolytisch oder hydrogenolytisch oder hintereinander in an sich beliebiger Reihenfolge photokatalytisch, elektrolytisch und hydrogenolytisch abgeschieden werden.

Bei den genannten Verfahren können mit Vorteil auch unter Zusatz von Säure oder Salzen davon in wässrigem Medium vorbehandelte und mit Lichtquellen mit einem hohen UV-C-Anteil belichtete Halbleiterpulver eingesetzt werden, oder die nach den genannten Verfahren mit Metallen beschichteten Halbleiterpulver werden vorzugsweise einer Nachbehandlung unterzogen, indem man sie unter Zusatz von Säure oder Salzen davon in wässrigem Medium suspendiert und erneut mit Licht, das hohe UV-C-Anteile aufweist, bestrahlt. Der pH des wässrigen Mediums liegt dabei zweckmässig zwischen etwa 1,0 und 9,0, wobei zur Einstellung des gewünschten pH-Wertes mit Vorteil Puffer mitverwendet werden, wie Natrium- und Kaliumacetat oder Natriumformiat. Als Säuren oder Salzen davon eignen sich beispielsweise solche der unter 1) genannten Art. Eine solche Vor- oder Nachbehandlung ist insbesondere bei Cd- oder Cd-haltigen Halbleiterpulvern von Vorteil.

Vor der Metallabscheidung können die Halbleiterpulver nötigenfalls reduktiv gereinigt werden. Bevorzugt ist die Katalysatorherstellung gemäss Verfahren 1), 3), 4) und 6), besonders gemäss Verfahren 1) und 3), wobei die Halbleiterpulver vorzugsweise wie oben beschrieben unter Zusatz von Säure oder Salzen davon in wässrigem Medium nachbehandelt und erneut bestrahlt werden.

Für die obigen Umsetzungen 1–4 und 6 kommen als Metallverbindungen vor allem einfache und komplexe Salze, besonders Ammonium- und Alkalihexa- oder -tetrahalogen-metallate, ferner Halogenide, Nitrate, Acetate und Cyanide in Betracht. Geeignete Metallverbindungen sind beispielsweise Hexachlorplatinsäure [Platin(IV) chlorwasserstoffsäure], Hexabromplatinsäure, deren Hydrate und Salze, wie Ammonium-hexachloroplatinat(IV), Ammonium-tetrachloroplatinat(II), Platin(IV)bromid, Platin(II)chlorid, Platin(IV)chlorid, Kaliumtetrachlorplatinat(II); Iridium(III)chlorid, Iridium(IV) chlorwasserstoffsäure-Hexahydrat, Ammonium-hexachloroiridat (IV); Gold(III)chlorid, -bromid und -jodid, Gold (I)cyanid und -acetat; Palladiumchlorid oder -jodid, Palladiumacetat, -cyanid und -nitrat; Ruthenium(III)chlorid-hydrat; Silberacetat und -nitrat; Rhodiumacetat, Rhodiumchlorid, Hexachloroosmat und Salze davon; Nickelchlorid, Nickelacetat, Chromchlorid, Kobaltchlorid, Kobaltacetat, Kupferchlorid und Kupferacetat. Bevorzugt sind Hexachloroplatinsäurehydrat, Rhodium(III)chlorid, Nickel(II)chlorid, Osmium-(III)chlorid, Ruthenium(III)chloridhydrat. Besonders bevorzugt ist Hexachloroplatinsäurehydrat.

Die Halbleiterpulver können gewünschtenfalls vor der Beschichtung mit den Metallen bei einem Druck von 100 bis $10^6$ Pa auch einer thermischen Vorbehandlung mit Gasen, wie $N_2$, $H_2S$, $H_2Se$, $H_2Te$, $CS_2$ oder Luft oder Gemischen davon, vorzugsweise Luft und insbesondere $H_2S$, unterzogen werden. Dabei liegen die Reaktionsgemperaturen zwischen etwa 600 und 950 °C. Für Cd-haltige Halbleiterpulver sind Reaktionstemperaturen beim Siedepunkt des Cadmiums bei dem jeweils angewendeten Druck ± 100 °C bevorzugt. Durch diese thermische Behandlung können die Kristallinität der Halbleiterpulver bei gleichbleibender Teilchengrösse verbessert und eine Reduktion der spezifischen Oberfläche der Halbleiterpulver erzielt werden, was sich günstig auf die Effizienz der erfindungsgemäss beschichteten Halbleiterpulver bei der Wasserstoffproduktion auswirkt.

Es ist manchmal vorteilhaft, die mit Metallen beschichteten Halbleiterpulver mit Säuren und/ oder Oxidationsmitteln zu behandeln.

Als Säuren eignen sich z.B. HBr, HJ, $H_2SO_4$, $HNO_3$, $H_3PO_4$ und organische Säuren mit 1 bis 10 C-Atomen; als Oxidationsmittel z.B. Brom, Chlor, Jod, HClO, $H_2O_2$, Hydroperoxide und Persäuren. Dabei werden die Halbleiterpulver in 0,1–20%igen wässrigen oder alkoholischen Lösungen der Säuren bzw. Oxidationsmittel während 10 sek. bis 1 Stunde gerührt und anschliessend abdestilliert, mit $H_2O$ oder Alkoholen gewaschen und anschliessend getrocknet.

Die im erfindungsgemässen Verfahren einzusetzenden beschichteten Halbleiterpulver sind neu, mit Ausnahme der beschichteten Cadmiumsulfid- und Cadmiumsulfoselenidpulver. Gegenstand der Erfindung sind somit auch mit 0,001 bis 10 Gew.-% Cu, Cr, Ni, Co oder Edelmetallen oder Gemischen davon beschichtete Halbleiterpulver aus ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ oder $Bi_2S_3$. Bevorzugt sind mit 0,001 bis 10 Gew.-% Platin, Iridium, Ruthenium, Palladium, Rhodium Nickel oder einer Platin-Silber-Mischung beschichtete ZnS-, $Cd_{1-x}Zn_xS$-, $Cd_{1-x}Hg_xS$- oder $Cd_{1-y}Ag_{2y}S$-, $Cd_{1-xy}Ag_{2y}Zn_xS$-Halbleiterpulver, worin X 0,01 bis 0,8 und y 0,001 bis 0,2 sind. Ganz besonders bevorzugt sind mit 0,001 bis 10 Gew.-% Nickel, Iridium oder Platin beschichtetes ZnS-Halbleiterpulver oder mit 0,001 bis 10 Gew.-% Platin, Ruthenium oder einer Platin-Silber-Mischung beschichtete $Cd_{1-x}Zn_xS$- oder $Cd_{1-y}Ag_{2y}S$-, $Cd_{1-x-y}Ag_{2y}Zn_xS$-Halbleiterpulver, wobei x 0,01 bis 0,8, besonders 0,05 bis 0,4 und y 0,001 bis 0,2 betragen.

Beispiel 1

mit Platin beschichtetes Zinksulfid. 0,6 g Hexachloroplatinsäurehydrat (0,24 g Platingehalt) werden in 82,3 ml Wasser und 5 ml 0,1 N Salzsäure gelöst und mit konzentrierter $Na_2CO_3$-Lösung auf pH 7 gestellt. Man versetzt mit 2,0 g Kaliumacetat und stellt den pH mit 1,7 ml 96%iger Essigsäure auf 4,5. Dann gibt man 10 g thermisch vorbehandeltes ZnS (spezifische Oberfläche 1,04 $m^2/g$) zu, entgast die Suspension während 30 Minuten bei 60 °C und belichtet anschliessend 30 Minuten lang mit einer 125 W Quecksilberhochdruckampe durch einen wassergekühlten Quarzfinger. Die erhaltene graue Suspension wird abfiltriert, mit destilliertem Wasser nachgewaschen und im Trockenschrank bei 60 °C/13000 Pa getrocknet. Pt-Gehalt 1,45 Gew.-%.

Die thermische Vorbehandlung des im obigen Beispiel verwendeten Zinksulfids wird unter Normaldruck wie folgt durchgeführt: 20 g Zinksulfidpulver (Alfa Ventron, elektronische Qualität, spezifische Oberfläche 33,5 $m^2/g$) werden in ein 750 ml-Quarzrohr gegeben. Der Reaktor wird durch 20-minütiges Einleiten von Stickstoff gespült. Dann wird weiterhin Stickstoff (ca. 2 l/h) eingeleitet und auf 490 °C erhitzt. Diese Temperatur wird während 30 Minuten aufrechterhalten. Danach wird der Stickstoff durch Einleiten von $H_2S$ (ca. 2 l/h) verdrängt und die Temperatur auf 750 °C erhöht. Das Zinksulfidpulver wird 90 Minuten bei dieser Temperatur gehalten, dann unter $H_2S$ auf 420 °C abgekühlt. Schliesslich wird der Schwefelwasserstoff durch Stickstoff verdrängt und auf Raumtemperatur abgekühlt. Das so erhaltene Zinksulfid weist eine spezifische Oberfläche von 1,04 $m^2$/g auf. Gemäss Untersuchung unter dem Elektronenmikroskop ist keine Veränderung der Teilchengrösse des ZnS-Pulvers eingetreten.

Beispiel 2

mit Platin beschichtetes Zinksulfid. 0,8 g Hexachlorplatinsäurehydrat (0,32 g Platingehalt) werden in 20 ml verdünnter HCl gelöst und dann zu 10 g Zinksulfid (spez. Oberfläche 0,94 $m^2$/g), das analog Beispiel 1 während 45 Minuten unter $N_2$ und während 90 Minuten bei 900 °C mit $H_2S$ vorbehandelt wurde, gegeben und gut vermischt. Die so erhaltene imprägnierte Substanz wird während 2 Stunden bei 80 °C/2000 Pa und dann weiterer 2 Stunden bei 60 °C in einem Heizexsiccator getrocknet. Anschliessend wird das Produkt während 2 Stunden bei 200 °C in einem Quarzrohr mit einem $H_2$-Strom behandelt. Man erhält mit Platin beschichtetes Zinksulfid in Form eines grauen Pulvers; Platingehalt 2,26 Gew.-%.

Beispiel 3

mit Rhodium beschichtetes Zinksulfid. Beispiel 2 wird wiederholt, jedoch unter Verwendung von 0,8 g Rhodium(III)chlorid. Man erhält mit Rhodium beschichtetes Zinksulfid in Form eines dunkelgrauen Pulvers; Rhodiumgehalt 2,6 Gew.-%.

Beispiel 4

mit Nickel beschichtetes Zinksulfid. Beispiel 2 wird wiederholt, jedoch unter Verwendung von 0,8 g Nickel(II)chlorid und Behandlung mit einem $H_2$-Strom bei 300 °C. Man erhält mit Nickel beschichtetes Zinksulfid in Form eines grauen Pulvers; Nickelgehalt 1,45 Gew.-%.

Beispiel 5

mit Ruthenium beschichtetes Zinksulfid. Beispiel 2 wird wiederholt, jedoch unter Verwendung von ZnS, das vor der thermischen Behandlung eine spez. Oberfläche von 30,6 $m^2$/g und danach eine solche von 0,78 $m^2$/g aufweist, sowie unter Verwendung von 0,8 g Ruthenium(III) chlorid. Man erhält mit Ruthenium beschichtetes Zinksulfid in Form eines grauen Pulvers; Ru-Gehalt 3,8 Gew.-%.

Beispiel 6

mit Osmium beschichtetes Zinksulfid. Beispiel 2 wird wiederholt, jedoch unter Verwendung von ZnS, das vor der thermischen Behandlung eine spez. Oberfläche von 6,1 $m^2$/g und danach eine solche von 1,29 $m^2$/g aufweist, und unter Verwendung von 0,8 g Osmium(III)chlorid. Man erhält mit Osmium beschichtetes Zinksulfid in Form eines dunkelgrauen Pulvers; Osmiumgehalt 5,1 Gew.-%.

Beispiel 7

86,2 ml Wasser und 3 ml 0,1 N Salzsäure werden mit konzentrierter wässriger $Na_2CO_3$-Lösung auf pH 7 gestellt, mit 1,0 g Kaliumacetat versetzt und mit 0,9 ml 96%iger Essigsäure auf pH 4,5 gestellt. Dann gibt man 5 g des gemäss Beispiel 2 erhaltenen mit Platin beschichteten Zinksulfids zu. Die Suspension wird 30 Minuten bei 60 °C mit Argon entgast und anschliessend 30 Minuten mit einer 125 W Quecksilberhochdrucklampe durch einen wassergekühlten Quarzfinger bestrahlt. Die erhaltene graue Suspension wird abfiltriert, mit destilliertem Wasser nachgewaschen und im Trockenschrank bei 60 °C/13000 Pa getrocknet. Platingehalt des erhaltenen Pulvers = 2,26 Gew.-%.

Beispiel 8

mit Platin beschichtetes Cadmiumzinksulfid. 0,6 g Hexachlorplatinsäurehydrat (0,24 g Platingehalt) werden in 77,3 ml Wasser und 5 ml 0,1 N Salzsäure gelöst und mit konzentrierter $Na_2CO_3$-Lösung auf pH 7 gestellt. Man versetzt mit 2,0 g Kaliumacetat und 5 ml einer 5%igen wässrigen Lösung von $Cd(NO_3)_2 \cdot 4 H_2O$ und stellt den pH mit 1,7 ml 96%iger Essigsäure auf 4,5. Dann gibt man 10 g thermisch vorbehandeltes Cadmiumzinksulfid (15 Mol% ZnS, $Cd_{0,85}Zn_{0,15}S$, spezifische Oberfläche 1,67 $m^2$/g) zu, entgast die Suspension während 30 Minuten bei 60 °C und belichtet anschliessend 30 Minuten lang mit einer 125 W Quecksilberhochdrucklampe durch einen wassergekühlten Quarzfinger. Die erhaltene grüne Suspension wird abfiltriert, mit destilliertem Wasser nachgewaschen und im Trockenschrank bei 60 °C/13000 Pa getrocknet. Platingehalt 2,0 Gew.-%.

Die termische Vorbehandlung des im obigen Beispiel verwendeten Cadmiumzinksulfids wird unter Normaldruck wie folgt vorgenommen: 20 g Cadmiumzinksulfid (Cadmium Gelb gemäss Colour Index Nr. 77117, $Cd_{0,86}Zn_{0,14}S$; spez. Oberfläche 5,02 $m^2$/g) werden in ein Quarzrohr gegeben. Nach dem Spülen des Reaktors mit Stickstoff wird weiterhin Stickstoff (ca. 2 l/h) eingeleitet. Dann wird der Stickstoff durch Einleiten von Schwefelwasserstoff (ca. 2 l/h) verdrängt, und die Temperatur wird auf 760 °C erhöht. Diese Temperatur wird 90 Minuten aufrechterhalten. Anschliessend wird auf Raumtemperatur abgekühlt, und der Schwefelwasserstoff wird durch Stickstoff verdrängt. Das erhaltene CdZnS hat eine spez. Oberfläche von 1,67 $m^2$/g und die Zusammensetzung $Cd_{0,85}Zn_{0,15}S$.

Beispiel 9

Beispiel 8 wird wiederholt unter Verwendung von 10 g thermisch vorbehandeltem Cadmiumsulfid (spez. Oberfläche 1,31 $m^2$/g). Das erhal-

tene beschichtete Cadmiumsulfid weist einen Pt-Gehalt von 1,5 Gew.-% auf.

Die thermische Vorbehandlung des im obigen Beispiel verwendeten Cadmiumsulfids wird unter Normaldruck wie folgt durchgeführt: 20 g Cadmiumsulfid (Siegfried techn. spez. Oberfläche 22,7 m²/g) werden in ein Quarzrohr gegeben. Nach dem Spülen des Reaktors mit Stickstoff wird weiter Stickstoff (ca. 2 l/h) eingeleitet und auf 490 °C erhitzt. Diese Temperatur wird 45 Minuten aufrechterhalten. Danach wird der Stickstoff durch Einleiten von $H_2S$ (ca. 2 l/h) verdrängt und die Temperatur auf 760 °C erhöht. Das Cadmiumsulfidpulver wird eine Stunde bei dieser Temperatur gehalten und dann unter $H_2S$ auf 430 °C abgekühlt. Anschliessend wird der Schwefelwasserstoff durch Einleiten von Stickstoff verdrängt und auf Raumtemperatur abgekühlt. Das erhaltene CdS weist eine spez. Oberfläche von 1,31 m²/g auf.

## Beispiel 10

mit Nickel beschichtetes Cadmiumzinksulfid. Beispiel 4 wird wiederholt, jedoch unter Verwendung von 10 g Cadmiumzinksulfid, das analog Beispiel 8 während 90 Minuten bei 760 °C mit $H_2S$ vorbehandelt wurde ($Cd_{0,85}Zn_{0,15}S$; spez. Oberfläche 3,43 m²/g). Man erhält mit Nickel beschichtetes Cadmiumzinksulfid in Form eines grünen Pulvers; Nickelgehalt 1,21 Gew.-%.

## Beispiel 11

mit Ruthenium beschichtetes Cadmiumzinksulfid. Beispiel 5 wird wiederholt, jedoch unter Verwendung von 10 g Cadmiumzinksulfid gemäss Beispiel 10. Man erhält mit Ruthenium beschichtetes Cadmiumzinksulfid in Form eines grüngrauen Pulvers; Rutheniumgehalt 3,9 Gew.-%.

## Beispiel 12

Die gemäss den Beispielen 3–6 beschichteten Zinksulfidpulver und die gemäss den Beispielen 10 und 11 beschichteten Cadmiumzinksulfidpulver werden wie in Beispiel 7 beschrieben einer Nachbehandlung unterzogen.

## Beispiel 13

mit Platin beschichtetes Cadmiumquecksilbersulfid. Beispiel 8 wird wiederholt, jedoch unter Verwendung von 10 g thermisch vorbehandeltem Cadmiumquecksilbersulfid ($Cd_{0,97}Hg_{0,03}S$, 3 Mol-% HgS, spez. Oberfläche 4,34 m²/g). Man erhält mit Platin beschichtetes Cadmiumquecksilbersulfid in Form eines gelbgrauen Pulvers; Platingehalt 1,37 Gew.-%.

Die thermische Vorbehandlung des im obigen Beispiel verwendeten Cadmiumquecksilbersulfids wird unter Normaldruck wie folgt vorgenommen: 20 g Cadmiumquecksilbersulfid (Mercadmium Orange gemäss Colour Index Nr. 77201, $Cd_{0,93}Hg_{0,07}S$, spez. Oberfläche 5,54 m²/g) werden in ein Quarzrohr gegeben. Nach dem Spülen des Reaktors mit Stickstoff wird das Cadmiumquecksilbersulfid-Pulver während 20 Minuten bei 610 °C mit $H_2S$ behandelt. Anschliessend wird abgekühlt, und der Schwefelwasserstoff wird durch Einleiten von Stickstoff verdrängt. Das erhaltene Cadmiumquecksilbersulfid weist eine spez. Oberfläche von 4,34 m²/g auf.

## Beispiel 14

mit Platin beschichtetes Cadmiumsilbersulfid. Beispiel 8 wird wiederholt, jedoch unter Verwendung von 10 g nicht thermisch vorbehandeltem Cadmiumsilbersulfid, enthaltend 0,8 Gew.-% Silber ($Cd_{0,995}Ag_{0,010}S$, spezifische Oberfläche 72,8 m²/g). Man erhält mit Platin beschichtetes Cadmiumsilbersulfid in Form eines braunen Pulvers; Platingehalt 1,88 Gew.-%.

## Beispiel 15

Beispiel 14 wird wiederholt, unter Verwendung von 10 g Cadmiumsulfid (spezifische Oberfläche 62,3 m²/g). Man erhält mit Platin beschichtetes Cadmiumsulfid mit einem Pt-Gehalt von 1,93 Gew.-%.

## Beispiel 16

mit Platin beschichtetes Zinkselenid. Beispiel 2 wird wiederholt, jedoch unter Verwendung von 10 g nicht thermisch vorbehandeltem Zinkselenid (spezifische Oberfläche 0,33 m²/g). Man erhält mit Platin beschichtetes Zinkselenid in Form eines schwarzgrünen Pulvers. 47 ml Wasser und 3 ml 96%ige Essigsäure werden mit 40 ml 2-molarer wässriger NaOH-Lösung auf pH 12,9 gestellt. Dann gibt man 5 g des obigen mit Platin beschichteten Zinkselenids zu. Die Suspension wird 30 Minuten bei 60 °C mit Argon entgast und anschliessend 30 Minuten mit einer 125 W Quecksilberhochdrucklampe durch einen wassergekühlten Quarzfinger bestrahlt. Die erhaltene schwarzgrüne Suspension wird abfiltriert, mit destilliertem Wasser nachgewaschen und im Trockenschrank bei 60 °C/13000 Pa getrocknet. Platingehalt des erhaltenen Pulvers 2,5 Gew.-%.

## Beispiel 17

mit Platin beschichtetes Zinktellurid. Beispiel 16 wird wiederholt, jedoch unter Verwendung von 10 g Zinktellurid (nicht thermisch vorbehandelt; spezifische Oberfläche 0,13 m²/g). Man erhält mit Platin beschichtetes Zinktellurid in Form eines dunkelgrauen Pulvers; Platingehalt 2,03 Gew.-%.

## Beispiel 18

mit Platin beschichtetes Lanthansulfid. Beispiel 1 wird wiederholt, jedoch unter Verwendung von 10 g Lanthansulfid (nicht thermisch vorbehandelt, spezifische Oberfläche 1,53 m²/g). Man erhält mit Platin beschichtetes Lanthansulfid in Form eines grüngrauen Pulvers; Platingehalt 1,88 Gew.-%.

## Beispiel 19

mit Platin beschichtetes Cadmiumsulfid. Beispiel 8 wird wiederholt, jedoch unter Verwendung von 10 g Cadmiumsulfid mit einer spez. Oberfläche von 62,3 m²/g, das analog Beispiel 9,

jedoch ohne $N_2$-Phase während 90 Minuten bei 760 °C mit $H_2S$ vorbehandelt wurde. Das so erhaltene Cadmiumsulfid weist eine spez. Oberfläche von 0,21 $m^2$/g auf. Man erhält mit Platin beschichtetes Cadmiumsulfid in Form eines grüngrauen Pulvers; Platingehalt 1,05 Gew.-%.

Beispiel 20

mit Ruthenium beschichtetes Cadmiumsulfid. Beispiel 5 wird wiederholt, jedoch unter Verwendung von 10 g Cadmiumsulfid (nicht thermisch vorbehandelt; spez. Oberfläche 0,64 $m^2$/g). Man erhält mit Ruthenium beschichtetes Cadmiumsulfid in Form eines schwarzgrünen Pulvers; Rutheniumgehalt 4 Gew.-%.

Beispiel 21

mit Rhodium beschichtetes Cadmiumsulfid. Beispiel 3 wird wiederholt, jedoch unter Verwendung von 10 g Cadmiumsulfid (nicht thermisch vorbehandelt; spez. Oberfläche 0,64 $m^2$/g). Man erhält mit Rhodium beschichtetes Cadmiumsulfid in Form eines grünschwarzen Pulvers; Rhodiumgehalt 4 Gew.-%.

Beispiel 22

mit Platin beschichtetes Cadmiumsulfoselenid. Beispiel 8 wird wiederholt, jedoch unter Verwendung von 10 g thermisch vorbehandeltem Cadmiumsulfoselenid ($CdS_{0,83}Se_{0,17}$, 17 Mol.-% CdSe, spez. Oberfläche 0,98 $m^2$/g). Man erhält mit Platin beschichtetes Cadmiumsulfoselenid in Form eines braunen Pulvers; Platingehalt 2,3 Gew.-%.

Die thermische Vorbehandlung des im obigen Beispiel verwendeten Cadmiumsulfoselenids wird unter Normaldruck wie folgt durchgeführt: 20 g Cadmiumsulfoselenid (Cadmium Orange gemäss Colour Index Nr. 77196, $CdS_{0,84}Se_{0,16}$, spez. Oberfläche 4,96 $m^2$/g) werden in ein Quarzrohr gegeben. Nach dem Spülen des Reaktors mit Stickstoff (20 Minuten) wird weiterhin Stickstoff eingeleitet (ca. 2 1/h) und auf 730 °C erhitzt. Diese Temperatur wird 90 Minuten gehalten. Dann wird unter Stickstoff auf Raumtemperatur abgekühlt. Das erhaltene Cadmiumsulfoselenid weist eine spez. Oberfläche von 0,98 $m^2$/g auf und hat die Zusammensetzung $CdS_{0,83}Se_{0,17}$.

Beispiel 23

mit Palladium beschichtetes Zinksulfid. Beispiel 1 wird wiederholt, jedoch unter Verwendung von 0,6 Palladium(II)chlorid und Zinksulfid gemäss Beispiel 5. Man erhält mit Palladium beschichtetes Zinksulfid in Form eines dunkelgrauen Pulvers; Pd-Gehalt 3 Gew.-%.

Beispiel 24

Photochemische Produktion von Wasserstoff aus Wasser unter gleichzeitiger Oxidation von Sulfit. 0,4 g des gemäss Beispiel 1 hergestellten platinbeschichteten Zinksulfids (1,45 Gew.-% Pt) werden in 90 ml einer 4,4%igen wässrigen Natriumsulfitlösung aufgeschlämmt und während 30 Minuten bei 60 °C mit Stickstoff entgast. Dann wird die erhaltene Suspension bei 60 °C in einem Photoreaktor, der mit einem Quarzfinger und einer 125 W Quecksilberhochdrucklampe ausgestattet ist (Lichtdurchlässigkeit > 200 nm) bestrahlt. Innerhalb einer Stunde entwickeln sich 50 ml Gas. Ohne Licht kann keine $H_2$-Entwicklung festgestellt werden.

Die quantitative Bestimmung des Wasserstoffs wird wie folgt durchgeführt: 700 ml des erhaltenen Gases werden bei Raumtemperatur (20–25 °C) zur Hydrierung einer Lösung von 3,0 g Nitrobenzol in 15 ml Methanol mit 0,3 g eines Pd-Kohlenkatalysators (5 Gew.-% Pd) verwendet. Nach 30 Stunden ist die Wasserstoffaufnahme (= 660 ml) beendet. Nach dem Abfiltrieren des Katalysators und dem Eindampfen des Lösungsmittels wird das zurückbleibende gelbe Öl als Gemisch auf 68,6 Gew.-% Nitrobenzol und 31,4 Gew.-% Anilin bestimmt. Daraus berechnet sich ein Wasserstoffverbrauch von 665 ml (bei Normaldruck und 20 °C).

Der entwickelte Wasserstoff war also > 90%ig. Gemäss gaschromatographischer Analyse besteht der Rest des Gases aus Stickstoff, der aus der vorgängigen Entgasung des Totvolumens stammt.

Beispiel 25

Die folgenden Beispiele illustrieren die Verwendung weiterer definitionsgemässer Halbleiterpulver zur Herstellung von Wasserstoff. Es werden jeweils eingesetzt:

Beispiel 25–41: 90 ml einer 4,4%igen wässrigen Natriumsulfitlösung;

Beispiele 42–46: 90 ml einer 5,0%igen wässrigen Natriumsulfidlösung ($Na_2S\cdot8\ H_2O$);

Beispiele 47–67: 90 ml einer wässrigen Lösung, die 0,24 Mol/l Natriumsulfid und 0,35 Mol/l Natriumsulfit enthält;

Beispiele 68–75: 90 ml einer wässrigen Lösung, die 0,24 Mol/l Natriumsulfid, 1,37 Mol/l Natriumhypophosphit und 2,9 Mol/l NaOH enthält.

Die restlichen Reaktionsbedingungen und die Resultate sind in der folgenden Tabelle angegeben.

Tabelle

| Beispiel Nr. | Halbleiter | Lichtquelle/Filter | $H_2$-Entwicklung [ml/h] | Bemerkungen |
|---|---|---|---|---|
| 25 | 0,4 g ZnS/3 Gew.-% Pd gemäss Beispiel 13 | 125 W Hg-Hochdrucklampe mit Quarzfinger; Lichtdurchlässigkeit > 200 nm | 32 | während 30 Min. entgast |
| 26 | 0,4 g ZnS/2,26 Gew.-% Pt gemäss Beisp. 2 | do. | 28 | do. |
| 27 | 0,4 g ZnS/2,26 Gew.-% Pt gem. Beispiel 7 | do. | 22 | do. |
| 28 | 0,4 g ZnS/2,6 Gew.-% Rh gem. Beispiel 3 | do. | 52 | do. |
| 29 | 0,4 g ZnS/2,6 Gew.-% Rh gem. Beisp. 3 und 12 | do. | 57 | do. |
| 30 | 0,4 g ZnS/1,45 Gew.-% Ni gem. Beispiel 4 | do. | 163 | do. |
| 31 | 0,4 g ZnS/1,45 Gew.-% Ni gem. Beisp. 4 und 12 | do. | 151 | do. |
| 32 | 0,4 g ZnS/3,8 Gew.-% Ru gem. Beispiel 5 | do. | 61 | do. |
| 33 | 0,4 g ZnS/3,8 Gew.-% Ru gem. Beisp. 5 und 12 | do. | 65 | do. |
| 34 | 0,4 g ZnS/5,1 Gew.-% Os gem. Beispiel 6 | do. | 27 | do. |
| 35 | 0,4 g ZnS/5,1 Gew.-% Os gem. Beisp. 6 und 12 | do. | 28 | do. |
| 36 | 0,4 g $Cd_{0,85}Zn_{0,15}S$/2,0 Gew.-% Pt gem. Beispiel 8 | 125 W Hg-Hochdrucklampe mit Pyrexfilter; Lichtdurchlässigkeit > 300 nm | 44 | do. |
| 37 | 0,4 g $Cd_{0,85}Zn_{0,15}S$/1,21 Gew.-% Ni gem. Beispiel 10 | do. | 13 | do. |
| 38 | 0,4 g $Cd_{0,85}Zn_{0,15}$ S/1,21 Gew.-% Ni gemäss Beispielen 10 und 12 | do. | 17 | do. |
| 39 | 0,4 g $Cd_{0,85}Zn_{0,15}S$/3,9 Gew.-% Ru gemäss Beispiel 11 | do. | 7 | do. |
| 40 | 0,4 g $Cd_{0,85}Zn_{0,15}S$/3,9 Gew.-% Ru gemäss Beispielen 11 und 12 | do. | 74 | do. |
| 41 | 0,4 g $Cd_{0,97}Hg_{0,03}S$/1,37 Gew.-% Pt gemäss Beispiel 13 | do. | 10 | do. |
| 42 | 0,4 g ZnS/1,45 Gew.-% Pt gemäss Beispiel 1 | 125 W Hg-Hochdrucklampe mit Quarzfinger; Lichtdurchlässigkeit > 200 nm | 133 | do. |
| 43 | 0,4 g $Cd_{0,995}Ag_{0,010}S$/ 1,88 Gew.-% Pt gemäss Beispiel 14 | 125 W Hg-Hochdrucklampe mit Pyrexfilter; Lichtdurchlässigkeit > 300 nm | 100 | do. |
| 44 | 0,4 g ZnSe/2,5 Gew.-% Pt gem. Beispiel 16 | do. | 16 | do. |
| 45 | 0,4 g ZnTe/2,03 Gew.-% Pt gem. Beispiel 17 | do. | 6 | do. |
| 46 | 0,4 g $La_2S_3$/1,88 Gew.-% Pt gemäss Beispiel 18 | do. | 5 | do. |
| 47 | 0,4 g ZnS/1,45 Gew.-% Pt gem. Beispiel 1 | 125 W Hg-Hochdrucklampe mit Quarzfinger; Lichtdurchlässigkeit > 200 nm | 193 | do. |
| 48 | 0,4 g ZnS/2,26 Gew.-% Pt gem. Beispiel 2 | do. | 128 | do. |

Tabelle (Fortsetzung)

| Bei-spiel Nr. | Halbleiter | Lichtquelle/Filter | $H_2$-Ent-wicklung [ml/h] | Bemerkungen |
|---|---|---|---|---|
| 49 | 0,4 g ZnS/2,26 Gew.-% Pt gem. Beispiel 7 | 125 W Hg-Hochdrucklampe mit Quarzfinger; Lichtdurchlässigkeit > 200 nm | 122 | während 30 Min. entgast |
| 50 | 0,4 g ZnS/1,45 Gew.-% Ni gem. Beispiel 4 | do. | 138 | do. |
| 51 | 0,4 g ZnS/1,45 Gew.-% Ni gemäss Beisp. 4 und 12 | do. | 182 | do. |
| 52 | 0,4 g ZnS/3,8 Gew.-% Ru gemäss Beispiel 5 | do. | 115 | do. |
| 53 | 0,4 g ZnS/3,8 Gew.-% Ru gemäss Beisp. 5 und 12 | do. | 122 | do. |
| 54 | 0,4 g ZnS/5,1 Gew.-% Os gemäss Beispiel 6 | do. | 110 | do. |
| 55 | 0,4 g ZnS/5,1 Gew.-% Os gemäss Beisp. 6 und 12 | do. | 111 | do. |
| 56 | 0,4 g $Cd_{0,85}Zn_{0,15}S$/2,0 Gew.-% Pt gem. Beispiel 8 | 125 W Hg-Hochdrucklampe mit Pyrexfilter; Lichtdurchlässigkeit > 300 nm | 170 | do. |
| 57 | 0,4 g CdS/1,5 Gew.-% Pt gemäss Beispiel 9 | do. | 87 | do. |
| 58 | 0,4 g $Cd_{0,85}Zn_{0,15}S$/1,21 Gew.-% Ni gemäss Beispiel 10 | do. | 28 | do. |
| 59 | 0,4 g $Cd_{0,85}Zn_{0,15}S$/1,21 Gew.-% Ni gem. Beisp. 10 und 12 | do. | 64 | do. |
| 60 | 0,4 g $Cd_{0,85}Zn_{0,15}S$/3,9 Gew.-% Ru gemäss Beispiel 11 | do. | 39 | do. |
| 61 | 0,4 g $Cd_{0,85}Zn_{0,15}S$/3,9 Gew.-% Ru gem. Beisp. 11 und 12 | do. | 139 | do. |
| 62 | 0,4 g $Cd_{0,97}Hg_{0,03}S$/1,37 Gew.-% Pt gemäss Beispiel 13 | do. | 138 | do. |
| 63 | 0,4 g $Cd_{0,995}Ag_{0,010}S$/1,88 Gew.-% Pt gem. Beisp. 14 | do. | 265 | do. |
| 64 | 0,4 g CdS/1,93 Gew.-% Pt gemäss Beispiel 15 | do. | 10 | do. |
| 65 | 0,4 g CdS/1,05 Gew.-% Pt gemäss Beispiel 19 | do. | 133 | do. |
| 66 | 0,4 g CdS/4 Gew.-% Ru gemäss Beispiel 20 | do. | 144 | do. |
| 67 | 0,4 g $CdS_{0,83}Se_{0,17}$ 2,3 Gew.-% Pt gemäss Beispiel 22 | do. | 110 | do. |
| 68 | 0,4 g ZnS/1,45 Gew.-% Pt gemäss Beispiel 1 | 125 W Hg-Hochdrucklampe mit Quarzfinger; Lichtdurchlässigkeit > 200 nm | 380 | do. |
| 69 | 0,4 g ZnS/1,45 Gew.-% Ni gemäss Beisp. 4 und 12 | do. | 312 | do. |
| 70 | 0,4 g $Cd_{0,85}Zn_{0,15}S$/2,0 Gew.-% Pt gemäss Beispiel 8 | 125 W Hg-Hochdrucklampe mit Pyrexfilter; Lichtdurchlässigkeit > 300 nm | 356 | do. |
| 71 | 0,4 g $Cd_{0,97}Hg_{0,03}S$/1,37 Gew.-% Pt gemäss Beispiel 13 | do. | 316 | do. |
| 72 | 0,4 g $Cd_{0,995}Ag_{0,010}S$/1,88 Gew.-% Pt gemäss Beispiel 14 | do. | 120 | do. |
| 73 | 0,4 g CdS/1,05 Gew.-% Pt gemäss Beispiel 19 | do. | 215 | do. |
| 74 | 0,4 g CdS/4 Gew.-% Ru gemäss Beispiel 20 | do. | 729 | do. |
| 75 | 0,4 g CdS/4 Gew.-% Rh gemäss Beispiel 21 | do. | 520 | do. |

**Beispiel 76**

Analog Beispiel 24 werden 0,4 g des gemäss Beispiel 20 hergestellten, mit Ruthenium beschichteten Cadmiumsulfids in 90 ml einer 4,4%igen wässrigen Lösung von $H_3PO_2$ angeschlämmt und mit Stickstoff entgast. Darauf wird die erhaltene Suspension mit einer Quecksilberhochdrucklampe mit einer Lichtdurchlässigkeit > 300 nm bestrahlt. Wasserstoffentwicklung 225 ml/h.

**Beispiel 77**

Analog Beispiel 24 werden 0,4 g des gemäss Beispiel 20 hergestellten, mit Ruthenium beschichteten Cadmiumsulfids in 90 ml einer 4,4%igen wässrigen Lösung von $H_3PO_3$ aufgeschlämmt und mit Stickstoff entgast. Darauf wird die erhaltene Suspension bei 60 °C mit einer Quecksilberhochdrucklampe mit einer Lichtdurchlässigkeit > 300 nm bestrahlt. Wasserstoffentwicklung 33 ml/h.

**Beispiel 78**

Analog Beispiel 24 werden 0,4 g des gemäss Beispiel 19 hergestellten, mit Platin beschichteten Cadmiumsulfids Pt-Gehalt 1,05 Gew.-%) in 90 ml einer wässrigen Lösung, die 0,24 Mol/l Natriumsulfid, 0,35 Mol/l phosphorige Säure und 1,3 Mol/l Natronlauge enthält, aufgeschlämmt und mit Stickstoff entgast. Darauf wird die erhaltene Suspension bei 60 °C mit einer Quecksilberhochdrucklampe mit einer Lichtdurchlässigkeit > 300 nm bestrahlt. Wasserstoffentwicklung 18 ml/h.

**Beispiel 79**

mit Silber beschichtetes Zinksulfid.

Beispiel 2 wird wiederholt, jedoch unter Verwendung von 0,6 g $AgNO_3$ und Zinksulfid gemäss Beispiel 5. Man erhält mit Silber beschichtetes Zinksulfid in Form eines dunkelgrauen Pulvers; Silbergehalt: 3,7 Gew.-%.

**Beispiel 80**

mit Iridium beschichtetes Zinksulfid.

Beispiel 2 wird wiederholt, jedoch unter Verwendung von 0,6 g $IrCl_3$ und Zinksulfid gemäss Beispiel 5. Man erhält mit Iridium beschichtetes Zinksulfid in Form eines dunkelgrauen Pulvers; Iridiumgehalt: 3,8 Gew.-%.

**Beispiel 81**

mit Iridium und Nickel beschichtetes Zinksulfid. Beispiel 2 wird wiederholt, jedoch unter Verwendung von 0,3 g $IrCl_3$, 0,3 g $NiCl_2$ und Zinksulfid gemäss Beispiel 5, und Behandlung mit einem $H_2$-Strom bei 300 °C. Man erhält mit Iridium und Nickel beschichtetes Zinksulfid in Form eines grauen Pulvers; Iridiumgehalt: 1,8 Gew.-%; Nickelgehalt: 0,7 Gew.-%

**Beispiel 82**

mit Platin und Silber beschichtetes Zinksulfid. Beispiel 1 wird wiederholt, jedoch unter Verwendung von 0,4 g Hexachloroplatinsäurehydrat,

0,2 g $AgNO_3$ und Zinksulfid gemäss Beispiel 5. Man erhält mit Platin und Silber beschichtetes Zinksulfid in Form eines grauen Pulvers; Platingehalt: 1,3 Gew.-%; Silbergehalt: 0,8 Gew.%.

**Beispiel 83**

mit Platin und Silber beschichtetes Cadmiumzinksulfid. Beispiel 8 wird wiederholt, jedoch unter Verwendung von 0,4 g Hexachloroplatinsäurehydrat, 0,2 g $AgNO_3$ und 10 g Cadmiumzinksulfid (Cadmium Gelb gemäss Colour Index Nr. 7717, $Cd_{0.86}Zn_{0.14}S$; spez. Oberfläche 5.02 $m^2/g$). Man erhält mit Platin und Silber beschichtetes Cadmiumzinksulfid in Form eines grüngrauen Pulvers; Platingehalt: 1,3 Gew.-%; Silbergehalt: 0,9 Gew.-%.

**Beispiel 84**

mit Platin beschichtetes Cadmiumsilbersulfid. Beispiel 8 wird wiederholt, jedoch unter Verwendung von 10 g nicht thermisch vorbehandeltem Cadmiumsilbersulfid ($Cd_{0.97}Ag_{0.06}S$, spez. Oberfläche 103 $m^2/g$). Man erhält mit Platin beschichtetes Cadmiumsilbersulfid in Form eines braunen Pulvers; Platingehalt: 1,8 Gew.-%.

**Beispiel 85**

mit Platin beschichtetes Cadmiumzinksilbersulfid. Beispiel 8 wird wiederholt, jedoch unter Verwendung von 10 g nicht thermisch vorbehandeltem Cadmiumzinksilbersulfid $Cd_{0.947}Zn_{0.050}Ag_{0.006}S$ spez. Oberfläche: 92 $m^2/g$). Man erhält mit Platin beschichtetes Cadmiumzinksilbersulfid in Form eines braunen Pulvers; Platingehalt: 2,2 Gew.-%.

**Beispiel 86**

mit Platin beschichtetes Cadmiumzinksilbersulfid. Beispiel wird wiederholt, jedoch unter Verwendung von 10 g nicht thermisch behandeltem Cadmiumzinksilbersulfid $Cd_{0.847}Zn_{0.149}Ag_{0.008}S$ spez. Oberfläche: 99 $m^2/g$). Man erhält mit Platin beschichtetes Cadmiumzinksilbersulfid in Form eines braunen Pulvers; Platingehalt: 2,1 Gew.-%.

**Beispiel 87**

mit Platin beschichtetes Cadmiumzinksilbersulfid. Beispiel 8 wird wiederholt, jedoch unter Verwendung von 10 g nicht thermisch behandeltem Cadmiumzinksilbersulfid $Cd_{0.640}Zn_{0.353}Ag_{0.012}S$ spez. Oberfläche: 48 $m^2/g$). Man erhält mit Platin beschichtetes Cadmiumzinksilbersulfid in Form eines graugelben Pulvers. Platingehalt: 20 Gew.-%.

**Beispiel 88**

mit Platin und Silber beschichtetes Cadmiumsulfid. Beispiel 8 wird wiederholt, jedoch unter Verwendung von 0,4 g Hexachloroplatinsäurehydrat, 0,06 g $AgNO_2$ und 10 g nicht thermisch behandeltem Cadmiumsulfid (spez. Oberfläche 62 $m^2/g$). Man erhält mit Platin und Silber beschichtetes Cadmiumsulfid in Form eines graugrünen Pulvers. Platingehalt: 1,4 Gew.-%; Silbergehalt: 0,4 Gew.-%.

Beispiel 89

mit Platin beschichtetes Cadmiumsulfid. Beispiel 2 wird wiederholt, jedoch unter Verwendung von 0,8 g Hexachloroplatinsäurehydrat und 20 g nicht thermisch behandeltem Cadmiumsulfid (spez. Oberfläche 0,26 $m^2$/g). Man erhält mit Platin beschichtetes Cadmiumsulfid in Form eines grauen Pulvers; Platingehalt: 1,1 Gew.-%.

Beispiel 90

mit Platin beschichtetes Cadmiumselenid. Beispiel 2 wird wiederholt, jedoch unter Verwendung von 1,6 g Hexachlorplatinsäurehydrat und 10 g Cadmiumselenid (spez. Oberfläche: 0,2 $m^2$/g), und Behandlung mit einem $H_2$-Strom bei 700 °C während 30 Minuten. Man erhält mit Platin beschichtetes Cadmiumselenid in Form eines schwarzen Pulvers. Platingehalt: 1,2 Gew.-%.

Beispiel 91

Die gemäss Beispielen 79–81 beschichteten Zinksulfidpulver werden wie in Beispiel 7 beschrieben einer Nachbehandlung unterzogen.

Beispiel 92

Man gibt 10 g des gemäss Beispiel 89 erhaltenen mit Platin beschichteten Cadmiumsulfids zu 200 ml einer 1 N Salzsäure-Lösung. Die Suspension wird 4 Minuten bei Raumtemperatur gerührt, dann abfiltriert, mit Wasser nachgewaschen und im Trockenschrank bei 60 °C/1300 Pa getrocknet.

Beispiel 93

Man gibt 5 g des gemäss Beispiel 89 erhaltenen mit Platin beschichteten Cadmiumsulfids zu 100 ml einer 1,0 Gew.-%igen Brom-Lösung in Methanol. Die Suspension wird 1 Minute bei Raumtemperatur gerührt, dann abfiltriert, mit Wasser nachgewaschen und im Trockenschrank bei 60 °C/1300 Pa getrocknet.

Beispiel 94

Verwendung von Halbleiterpulvern zur Herstellung von Wasserstoff. Es werden jeweils eingesetzt:

Beispiele 95–107: 90 ml einer 4,4%igen wässrigen Natriumsulfidlösung;

Beispiele 108–110: 90 ml einer 5,0%igen wässrigen Natriumsulfidlösung ($Na_2S \cdot 8\ H_2O$);

Beispiel 111–123: 90 ml einer wässrigen Lösung, die 0,24 Mol/l Natriumsulfid und 0,35 Mol/l Natriumsulfit enthält.

Die Reaktionsbedingungen und die Resultate sind in der folgenden Tabelle angegeben. Vor Reaktionsbeginn wird jeweils 30 Minuten lang entgast.

| Beispiel Nr. | Halbleiter | Lichtquelle/Filter | $H_2$-Entwicklung [ml/h] |
|---|---|---|---|
| 95 | 0,4 g ZnS/3,7 Gew.-% Ag gemäss Beispiel 79 | 125 W Hg-Hochdrucklampe mit Quarzfinger Lichtdurchlässigkeit > 200 nm | 21 |
| 96 | 0,4 g ZnS/3,7 Gew.-% Ag gemäss Beispielen 79 und 91 | do. | 46 |
| 97 | 0,4 g ZnS/3,8 Gew.-% Ir gemäss Beispiel 80 | do. | 76 |
| 98 | 0,4 g ZnS/3,8 Gew.-% Ir gemäss Beispielen 80 und 91 | do. | 109 |
| 99 | 0,4 g ZnS/1,8 Gew.-% Ir und 0,7 Gew.-% Ni gemäss Beispiel 81 | do. | 42 |
| 100 | 0,4 g ZnS/1,8 Gew.-% Ir und 0,7 Gew.-% Ni gemäss Beispielen 81 und 91 | do. | 38 |
| 101 | 0,4 g ZnS/1,3 Gew.-% Pt und 0,8 Gew.-% Ag gemäss Beispiel 82 | do. | 26 |
| 102 | 0,4 g $Cd_{0,947}Zn_{0,050}Ag_{0,006}S$/ 2,2 Gew.-% Pt gemäss Beispiel 85 | 125 W Hg-Hochdrucklampe mit Pyrexfilter Lichtdurchlässigkeit > 300 nm | 12 |
| 103 | 0,4 g $Cd_{0,847}Zn_{0,149}Ag_{0,008}S$/ 2,1 Gew.-% Pt gemäss Beispiel 86 | do. | 15 |
| 104 | 0,4 g $Cd_{0,640}Zn_{0,353}Ag_{0,012}S$/ 2,1 Gew.-% Pt gemäss Beispiel 87 | do. | 21 |
| 105 | 0,4 g CdS/1,4 Gew.-% Pt und 0,4 Gew.-% Ag gemäss Beispiel 88 | do. | 23 |
| 106 | 0,4 g CdS/1,1 Gew.-% Pt gemäss Beispielen 89 und 92 | do. | 28 |
| 107 | 0,6 g CdS/1,1 Gew.-% Pt gemäss Beispielen 89 und 93 | do. | 61 |
| 108 | 1,0 g CdSe/1,2 Gew.-% Pt gemäss Beispiel 90 | do. | 43 |

Tabelle (Fortsetzung)

| Beispiel Nr. | Halbleiter | Lichtquelle/Filter | $H_2$-Entwicklung [ml/h] |
|---|---|---|---|
| 109 | 0,4 g CdS/1,1 Gew.-% Pt gemäss Beispielen 89 und 92 | 125 W Hg-Hochdrucklampe mit Pyrexfilter Lichtdurchlässigkeit > 300 nm | 87 |
| 110 | 0,6 g CdS/1,1 Gew.-% Pt gemäss Beispielen 89 und 93 | do. | 77 |
| 111 | 0,4 g ZnS/3,7 Gew.-% Ag gemäss Beispiel 79 | 125 W Hg-Hochdrucklampe mit Quarzfilter Lichtdurchlässigkeit > 200 nm | 122 |
| 112 | 0,4 g ZnS/3,7 Gew.-% Ag gemäss Beispielen 79 und 91 | do. | 145 |
| 113 | 0,4 g ZnS/3,8 Gew.-% Ir gemäss Beispiel 80 | do. | 171 |
| 114 | 0,4 g ZnS/3,8 Gew.-% Ir gemäss Beispielen 80 und 91 | do. | 199 |
| 115 | 0,4 g ZnS/1,8 Gew.-% Ir und 0,7 Gew.-% Ni gemäss Beispiel 81 | do. | 144 |
| 116 | 0,4 g ZbS/1,8 Gew.-% Ir und 0,7 Gew.-% Ni gemäss Beispielen 81 und 91 | do. | 148 |
| 117 | 0,6 g ZnS/1,3 Gew.-% Pt und 0,8 Gew.-% Ag gemäss Beispiel 82 | do. | 141 |
| 118 | 0,4 g $Cd_{0,86}Zn_{0,14}S$/1,3 Gew.-% Pt und 0,9 Gew.-% Ag gemäss Beispiel 83 | 125 W Hg-Hochdrucklampe mit Pyrexfilter Lichtdurchlässigkeit > 300 nm | 101 |
| 119 | 0,4 g $Cd_{0,97}Ag_{0,03}S$/1,8 Gew.-% Pt gemäss Beispiel 84 | do. | 209 |
| 120 | 0,4 g $Cd_{0,947}Zn_{0,050}Ag_{0,006}S$/ 2,2 Gew.-% Pt gemäss Beispiel 85 | do. | 276 |
| 121 | 0,4 g $Cd_{0,847}Zn_{0,149}Ag_{0,008}S$/ 2,1 Gew.-% Pt gemäss Beispiel 86 | do. | 307 |
| 122 | 0,4 g $Cd_{0,640}Zn_{0,353}Ag_{0,012}S$/ 2,0 Gew.-% Pt gemäss Beispiel 87 | do. | 225 |
| 123 | 0,4 g CdS/1,4 Gew.-% Pt und 0,4 Gew.-% Ag gemäss Beispiel 88 | do. | 147 |
| 124 | 1,0 g CdSe/1,2 Gew.-% Pt gemäss Beispiel 90 | do. | 18 |

## Patentansprüche

1. Verfahren zur selektiven Produktion von Wasserstoff mittels heterogener Photoredoxkatalyse, dadurch gekennzeichnet, dass man in der Suspension eines mit 0,001 bis 10 Gew.-% Cu, Cr, Ni, Co oder einem Edelmetall oder Gemischen davon beschichteten Halbleiterpulvers aus ZnS, $Cd_{1-x}Zn_xS$, $Zn_{1-x}Hg_xS$, $Cd_{1-x}Hg_xS$, $Zn_{1-y}Ag_{2y}S$, $Cd_{10-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$, $Bi_2S$, CdS oder $CdS_{1-x}Se_x$, worin x 0,001 bis 0,99 und y 0,0001 bis 0,20 sind, Gemische aus Wasser und Alkalimetall-, Erdalkalimetall- oder Ammoniumsulfiten, -sulfiden, -hypophosphiten, -phosphiten und/oder den entsprechenden freien Säuren unter Lichteinwirkung zur Reaktion bringt, wobei im Falle von CdS- oder $CdS_{1-x}Se_x$-Halbleiterpulvern Hypophosphite, Phosphite oder die entsprechenden freien Säuren oder Gemische aus den genannten Reduktionsmitteln verwendet werden.

2. Verfahren nach Anspruch 1, dadurch gekennzeichnet, dass man als Suspensionsmittel Wasser verwendet.

3. Verfahren nach Anspruch 1, dadurch gekennzeichnet, dass man ein Alkalimetallsulfit oder -sulfid, Ammoniumsulfit oder -sulfid, ein Alkalimetallhypophosphit oder -phosphit, Ammoniumhypophosphit oder -phosphit, unterphosphorige Säure, phosphorige Säure oder Gemische davon verwendet.

4. Verfahren nach Anspruch 1, dadurch gekennzeichnet, dass man ein Gemisch aus einem Alkalimetall- oder Ammoniumsulfid und einem Alkalimetall- oder Ammoniumsulfit, ein Gemisch aus einem Alkalimetall- oder Ammoniumhypophosphit oder ein Gemisch aus einem Alkalimetall- oder Ammoniumsulfid, einem Alkalimetall- oder Ammoniumhypophosphit und einer Base verwendet.

5. Verfahren nach Anspruch 1, dadurch gekennzeichnet, dass man die Reaktion zwischen 20 °C und dem Siedepunkt des verwendeten Suspensionsmittels durchführt.

6. Verfahren nach Anspruch 1, dadurch gekennzeichnet, dass man die mit den Metallen beschichteten Halbleiterpulver in einer Menge von 0,1 bis 5 Gew.-%, bezogen auf das Reaktionsvolumen, einsetzt.

7. Verfahren nach Anspruch 1, dadurch gekennzeichnet, dass man für die Reaktion mit Gemischen aus Sulfiden und Sulfiten oder Sulfiden und Hypophosphiten, Phosphiten, unterphosphoriger oder phosphoriger Säure mindestens teilweise mit Platin, Ruthenium, Rhodium oder einer Mischung Platin-Silber beschichtetes Cadmiumsulfoselenid oder Cadmiumsulfid verwendet.

8. Verfahren nach Anspruch 1, dadurch gekennzeichnet, dass man mit 0,001 bis 10 Gew.-% Platin, Ruthenium, Palladium, Rhodium, Iridium, Nickel oder einer Mischung Platin-Silber beschichtetes ZnS-, $Cd_{1-x}Zn_xS$-, $Cd_{1-x}Hg_xS$-, $Cd_{1-y}Ag_{2y}S$, $Cd_{1-x-y}Ag_{2y}Zn_xS$--Halbleiterpulver verwendet, worin x 0,01 bis 0,8 und y 0,001 bis 0,2 sind.

9. Verfahren nach Anspruch 1, dadurch gekennzeichnet, dass man mit 0,001 bis 10 Gew.-% Nickel, Iridium oder Platin beschichtetes ZnS-Halbleiterpulver oder mit 0,001 bis 10 Gew.-% Platin, Ruthenium oder einer Mischung Platin/Silber beschichtete $Cd_{1-x}Zn_xS$-, $Cd_{1-y}Ag_{2y}S$- oder $Cd_{1-x-y}Ag_{2y}Zn_xS$-Halbleiterpulver verwendet, worin x 0,01 bis 0,8, besonders 0,05 bis 0,4, und y 0,001 bis 0,2 betragen.

10. Verfahren zur Herstellung von 0,001 bis 10 Gew.-% Cu, Cr, Ni, Co oder einem Edelmetall oder Gemischen davon beschichteten Halbleiterpulvern aus ZnS, $Cd_{1-x}Zn_xS$, $Zn_{1-x}Hg_xS$, $Cd_{1-x}HgS$, $Zn_{1-y}Ag_{2y}S$, $Cd_{1-y}Ag_{2y}S$, $Cd_{1-x-y}Ag_{2y}Zn_xS$, $Zn_{y-l}Cu_yS$, $Cd_{1-y}CU_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ oder $Bi_2S_3$, dadurch gekennzeichnet, dass man die Halbleiterpulver unter Zusatz von Säure oder einem Salz davon in einer wässrigen Lösung oder Suspension einer entsprechenden Metallverbindung oder eines Gemisches entsprechender Metallverbindungen suspendiert und dann belichtet, wobei für die Beschichtung der Halbleiterpulver insbesondere Lichtquellen mit hohem UV-C-Anteil eingesetzt werden.

11. Verfahren zur Herstellung von mit 0,001 bis 10 Gew.-% Cu, Cr, Ni, Co oder einem Edelmetall oder Gemischen davon beschichteten Halbleiterpulvern aus ZnS, $Cd_{1-x}Zn_xS$, $Zn_{1-x}Hg_xS$, $Cd_{1-x}Hg_xS$, $Zn_{1-y}Ag_{2y}$-S, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Te_x$, $ZnSe_{y-x}Te_x$, CdSe, CdTe, $CdS_{1-x}Te_x$, $CdSe_{1-x}Te_x$, $La_2S_3$ oder $Bi_2S_3$, dadurch gekennzeichnet, dass man das Halbleiterpulver mit einer wässrigen Lösung einer entsprechenden Metallverbindung oder eines Gemisches entsprechender Metallverbindungen imprägniert, gegebenenfalls unter Zusatz von Säure, anschliessend bei erhöhter Temperatur trocknet und die Metallverbindung mit $H_2$ reduziert.

12. Verfahren nach Anspruch 10 oder 11, dadurch gekennzeichnet, dass man unter Zusatz von Säure oder Salzen davon in wässrigem Medium vorbehandeltes und mit Lichtquellen mit einem hohen UV-C-Anteil belichtete Halbleiterpulver verwendet.

13. Verfahren nach Anspruch 10 oder 11, dadurch gekennzeichnet, dass man die mit Cu, Cr, Ni, Co oder einem Edelmetall oder Gemischen davon beschichteten Halbleiterpulver einer Nachbehandlung unterzieht, indem man sie unter Zusatz von Säure oder Salzen davon in wässrigem Medium suspendiert und erneut mit Licht, das hohe UV-C-Anteile aufweist, bestrahlt.

14. Verfahren nach den Ansprüchen 10 oder 11, dadurch gekennzeichnet, dass man die beschichteten Halbleiterpulver mit Säuren, Oxidationsmitteln oder Gemischen hiervon behandelt.

15. Mit 0,001 bis 10 Gew.-% Cu, Cr, Ni, Co oder einem Edelmetall oder Gemischen davon beschichtete Halbleiterpulver aus ZnS, $Cd_{1-x}Zn_xS$, $Zn_{1-x}Hg_xS$, $Cd_{1-x}Hg_xS$, $Zn_{1-y}Ag_{2y}S$, $Cd_{1-x-y}Ag_{2y}Zn_xS$, $Cd_{1-y}Ag_{2y}S$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ oder $Bi_2S_3$.

16. Mit 0,001 bis 10 Gew.-% Platin, Iridium, Ruthenium, Palladium, Rhodium oder einer Platin-Silber-Mischung beschichtete ZnS-, $Cd_{1-x}Zn_xS$-, $Cd_{1-x}Hg_xS$-, $Cd_{1-y}Ag_{2y}S$- oder $Cd_{1-x-y}Ag_{2y}Zn_xS$-Halbleiterpulver nach Anspruch 15, worin x 0,01 bis 0,8 und y 0,001 bis 0,2 sind.

17. Mit 0,001 bis 10 Gew.-% Nickel, Iridium oder Platin beschichtetes ZnS-Halbleiterpulver oder mindestens teilweise mit Platin, Ruthenium oder Platin-Silber-Mischung beschichtete $Cd_{1-x}Zn_xS$-, $Cd_{1-y}Ag_{2y}S$- oder $Cd_{1-x-y}Ag_{2y}Zn_xS$-Halbleiterpulver gemäss Anspruch 15, worin x 0,01 bis 0,8, besonders 0,05 bis 0,4 und y 0,001 bis 0,2 betragen.

## Revendications

1. Procédé pour la production sélective d'hydrogène à l'aide d'une catalyse hétérogène photo-rédox, caractérisé en ce qu'on fait réagir en suspension une poudre de semi-conducteur, revêtu de 0,001 à 10% en poids de Cu, Cr, Ni, Co ou d'un métal noble ou d'un de leurs mélanges, le semi-conducteur étant formé de ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$, $Bi_2S$, CdS ou $CdS_{1-x}Se_x$, (où x vaut 0,001 à 0,99 et y vaut de 0,0001 à 0,20), de mélanges d'eau et de sulfites, sulfures, hypophosphites, ou phosphites de métaux alcalins, de métaux alcalino-terreux ou d'ammonium et/ou des acides libres correspondants, sous l'effet de la lumière, et, en cas d'utilisation de poudre de semi-conducteurs formés de CdS ou

de $CdS_{1-x}Se_x$, on utilise des hypophosphites, des phosphites ou des acides libres correspondants ou des mélanges des réducteurs cités.

2. Procédé selon la revendication 1, caractérisé en ce qu'on utilise l'eau comme milieu de mise en suspension.

3. Procédé selon la revendication 1, caractérisé en ce qu'on utilise un sulfite ou sulfure de métal alcalin, du sulfite ou sulfure d'ammonium, un hypophosphite ou phosphite de métal alcalin, l'hypophosphite ou le phosphite d'ammonium, l'acide hypophosphoreux, l'acide phosphoreux ou un de leurs mélanges.

4. Procédé selon la revendication 1, caractérisé en ce qu'on utilise un mélange d'un sulfure de métal alcalin ou d'ammonium et d'un sulfite de métal alcalin ou d'ammonium, un mélange d'un sulfure de métal alcalin ou d'ammonium et d'un hypophosphite de métal alcalin ou d'ammonium ou un mélange d'un sulfure de métal alcalin ou d'ammonium, d'un hypophosphite de métal alcalin ou d'ammonium et d'une base.

5. Procédé selon la revendication 1, caractérisé en ce qu'on effectue la réaction entre 20 °C et le point d'ébullition du milieu utilisé pour la mise en suspension.

6. Procédé selon la revendication 1, caractérisé en ce qu'on utilise la poudre de semi-conducteur, revêtu des métaux, en une quantité de 0,1 à 5% en poids, par rapport au volume de réaction.

7. Procédé selon la revendication 1, caractérisé en ce qu'on utilise pour la réaction avec des mélanges de sulfures et de sulfites ou de sulfures et d'hypophosphites, de phosphites, d'acides hypophosphoreux ou d'acides phosphoreux, du sulfoséléniure de cadmium ou du sulfure de cadmium au moins partiellement revêtu de platine, de ruthénium, de rhodium ou d'un mélange platine/argent.

8. Procédé selon la revendication 1, caractérisé en ce qu'on utilise de la poudre de semi-conducteur formé de ZnS, $Cd_{1-x}Zn_xS$, $Cd_{1-x}Hg_xS$, $Cd_{1-y}Ag_{2y}S$, $Cd_{1-x-y}Ag_{2y}Zn_xS$, revêtu de 0,001 à 10% en poids de platine, de ruthénium, de palladium, de rhodium, d'iridium, de nickel ou d'un mélange de platine/argent, x valant de 0,01 à 0,8 et y valant de 0,001 à 0,2.

9. Procédé selon la revendication 1, caractérisé en ce qu'on utilise de la poudre de ZnS, semi-conducteur revêtu de 0,001% à 10% en poids de nickel, d'iridium ou de platine, ou de la poudre de $Cd_{1-x}Zn_xS$, $Cd_{1-y}Ag_{2y}S$ ou $Cd_{1-x-y}Ag_{2y}Zn_xS$, semi-conducteur revêtu de 0,001 à 10% en poids de platine, de ruthénium ou d'un mélange platine/argent, x valant 0,01 à 0,8, en particulier 0,05 à 0,4, et y valant de 0,001 à 0,2.

10. Procédé pour préparer des poudres de semi-conducteur formé de ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-x-y}Ag_{2y}Zn_xS$, $Zn_{y-1}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ ou $Bi_2S_3$, les semi-conducteurs étant revêtus de 0,001 à 10% en poids de Cu, Cr, Ni, Co ou d'un métal noble ou d'un de leurs mélanges, procédé caractérisé en ce qu'on met la poudre de semi-conducteur, avec addition d'un acide ou d'un sel de l'acide en suspension dans une solution ou suspension aqueuse d'un composé de métal correspondant ou d'un mélange de composés de métaux correspondants et l'on expose ensuite à un éclairage, en utilisant, pour le revêtement de la poudre de semi-conducteur, en particulier des sources lumineuses ayant une grande proportion de rayons ultraviolets.

11. Procédé pour préparer des poudres de semi-conducteurs formés de ZnS, $Cd_{1-x}Zn_xS$, $Zn_{1-x}Hg_xS$, $Cd_{1-x}Hg_xS$, $Zn_{1-y}Ag_{2y}$–S, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Te_x$, $ZnSe_{1-x}Te_x$, CdSe, CdTe, $CdS_{1-x}Te_x$, $CdSe_{1-x}Te_x$, $La_2S_3$ ou $Bi_2S_3$, revêtus de 0,001 à 10% en poids de Cu, Cr, Ni, Co ou un métal noble ou un de leurs mélanges, procédé caractérisé en ce qu'on imprègne la poudre de semi-conducteur avec une solution aqueuse d'un composé de métal correspondant ou d'un mélange de composés de métaux correspondants, éventuellement avec addition d'un acide, puis on sèche à température élevée et l'on réduit par $H_2$ le composé de métal.

12. Procédé selon la revendication 10 ou 11, caractérisé en ce qu'on utilise une poudre de semi-conducteur prétraitée par addition d'acide ou de sels d'acide en milieu aqueux et qui a été exposée à un éclairage par des sources lumineuses comportant une proportion élevée de rayons ultraviolets.

13. Procédé selon la revendication 10 ou 11, caractérisé en ce qu'on soumet la poudre de semi-conducteur, revêtu de Cu, Cr, Ni, Co ou d'un métal noble ou d'un de leurs mélanges, à un traitement subséquent en mettant cette poudre en suspension en milieu aqueux, avec addition d'un acide ou de sel, et l'on expose à nouveau à un éclairage par de la lumière présentant une forte proportion de rayons ultraviolets.

14. Procédé selon les revendications 10 ou 11, caractérisé en ce qu'on traite par les acides, des oxydants ou leurs mélanges les poudres de semi-conducteurs revêtus.

15. Poudre de semi-conducteur, formé par ZnS, $Cd_{1-x}Zn_xS$, $Zn_{1-x}Hg_xS$, $Cd_{1-x}Hg_xS$, $Zn_{1-y}Ag_{2y}S$, $Cd_{1-x-y}Ag_{2y}Zn_xS$, $Cd_{1-y}Ag_{2y}S$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ ou $Bi_2S_3$, cette poudre étant revêtue de 0,001 à 10% en poids de Cu, Ni, Co ou un métal noble ou un de leurs mélanges.

16. Poudre de semi-conducteur formé de ZnS, $Cd_{1-x}Zn_xS$, $Cd_{1-x}Hg_xS$, $Cd_{1-y}Ag_{2y}S$ ou $Cd_{1-x-y}Ag_{2y}Zn_xS$, comportant un revêtement de 0,001% à 10% en poids de platine, d'iridium, de ruthénium, de palladium, de rhodium ou d'un mélange platine/argent, selon la revendication 15, x valant 0,01 à 0,8 et y valant 0,001 à 0,2.

17. Poudre de ZnS semi-conducteur revêtu de 0,001 à 10% en poids de nickel, d'iridium ou de platine ou poudre de $Cd_{1-x}Zn_xS$, $Cd_{1-y}Ag_{2y}S$ ou $Cd_{1-x-y}Ag_{2y}Zn_xS$, semi-conducteur revêtu au moins partiellement de platine, de ruthénium ou d'un mélange de platine/argent, selon la revendication 15, x valant 0,01 à 0,8, en particulier 0,05 à 0,4 et y valant de 0,001 à 0,2.

## Claims

1. A process for the selective production of hydrogen by means of heterogeneous photo-redox catalysis, which process comprises reacting, under the action of light, a mixture of water and an alkali metal, alkaline earth metal or ammonium sulfite, sulfide, hypophosphite or phosphite and/or the corresponding free acid in a suspension of a semiconductor powder of ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$, $Bi_2S$, CdS or $CdS_{1-x}Se_x$, in which x is 0.001 to 0.99 and y is 0.0001 to 0,20, which powder is a coated with 0.001 to 10% by weight of Cu, Cr, Ni, Co or a noble metal or a mixture thereof; a hypophosphite or phosphite or the corresponding free acid or a mixture of the reducing agents mentioned being used in the case of a CdS semiconductor powder or $CdS_{1-x}Se_x$ semiconductor powder.

2. A process according to claim 1, which comprises the use of water as suspending agent.

3. A process according to claim 1, which comprises the use of an alkali metal sulfite or sulfide, ammonium sulfite or sulfide, an alkali metal hypophosphite or phosphite, ammonium hypophosphite or phosphite, hypophosphorous acid, phosphorous acid or a mixture thereof.

4. A process according to claim 1, which comprises the use of a mixture of an alkali metal sulfide or ammonium sulfide and an alkali metal sulfite or ammonium sulfite, a mixture of an alkali metal sulfide or ammonium sulfide and an alkali metal hypophosphite or ammonium hypophosphite, or a mixture of an alkali metal sulfide or ammonium sulfide, an alkali metal hypophosphite or ammonium hypophosphite and a base.

5. A process according to claim 1, wherein the reaction in carried out in the temperature range from 20 °C to the boiling point of the suspending agent used.

6. A process according to claim 1, wherein the semiconductor powder coated with the metals is employed in an amount of 0.1 to 5% by weight, based on the reaction volume.

7. A process according to claim 1, which comprises the use of cadmium sulfoselenide or cadmium sulfide at least partly coated with platinum, ruthenium, rhodium or a platinum/silver mixture for the reaction with a mixture of sulfides and sulfites, or sulfides and hypophosphites, phosphites, hypophosphorous acid or phosphorous acid.

8. A process according to claim 1, which comprises the use of a semiconductor powder of ZnS, $Cd_{1-x}Zn_xS$, $Cd_{1-x}Hg_xS$, $Cd_{1-y}Ag_{2y}S$, or $Cd_{1-x-y}AG_{2y}Zn_xS$, in which x is 0.01 to 0.8 and y is 0.001 to 0.2, which powder is coated with 0.001 to 10% by weight of platinum, ruthenium, palladium, rhodium, iridium, nickel or a platinum/silver mixture.

9. A process according to claim 1, which comprises the use of ZnS semiconductor powder coated with 0.001 to 10% by weight of nickel, iridium or platinum or of a semiconductor powder of $Cd_{1-x}Zn_xS$, $Cd_{1-y}Ag_{2y}S$ or $Cd_{1-x-y}Ag_{2y}-Zn_xS$, in which x is 0.01 to 0.8, in particular 0.05 to 0.4, and y is 0.001 to 0.2, which powder is coated with 0.001 to 10% by weight of platinum, ruthenium or a platinum/silver mixture.

10. A process for the preparation of a semiconductor powder of ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-y}Ag_{2y}Zn_xS$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe, $CdS_{1-x}Te_x$, $CdSe_{1-x}Te_x$, $La_2S_3$ or $Bi_2S_3$, which powder is coated with 0.001 to 10% by weight of Cu, Cr, Ni, Co or a noble metal or a mixture thereof, which process comprises suspending the semiconductor powder in an aqueous solution or suspension of an appropriate metal compound or a mixture of appropriate metal compounds, with the addition of an acid or a salt thereof, and the exposing the suspension to light, in particular light sources of high UV-C content being used for coating the semiconductor powder.

11. A process for the preparation of a semiconductor powder of ZnS, $Cd_{1-x}Zn_xS$, $Zn_{1-x}Hg_xS$, $Cd_{1-x}Hg_xS$, $Zn_{1-y}Ag_{2y}S$, $Cd_{1-y}Ag_{2y}S$, $Cd_{1-x-y}Ag_{2y}Zn_xS$, $Zn_{1-y}Cu_yS$, $Cd_{1-y}Cu_yS$, ZnSe, ZnTe, $ZnS_{1-x}Te_x$, $ZnSe_{1-x}Te_x$, CdSe, CdTe, $CdS_{1-x}Te_x$, $CdSe_{1-x}Te_x$, $La_2S_3$ or $Bi_2S_3$, which powder is coated with 0.001 to 10% by weight of Cu, Cr, Ni, Co or a noble metal or a mixture thereof, which process comprises impregnating the semiconductor powder with an aqueous solution of an appropriate metal compound or a mixture of appropriate metal compounds, with or without the addition of an acid, and then drying the powder at elevated temperature and reducing the metal compound with $H_2$.

12. A process according to either of claims 10 or 11, which comprises the use of a semiconductor powder which has been pre-treated in an aqueous medium, with the addition of an acid or a salt thereof, and exposed to a light source of high UV-C content.

13. A process according to either of claims 10 or 11, wherein the semiconductor powder coated with Cu, Cr, Ni, Co or a noble metal or a mixture thereof is after-treated by being suspended in an aqueous medium, with the addition of an acid or a salt thereof, and irradiated again with light of high UV-C content.

14. A process according to either of claims 10 or 11, wherein the coated semiconductor powder is treated with an acid, oxidising agent or mixture thereof.

15. A semiconductor powder of ZnS, $Cd_{1-x}Zn_xS$, $Zn_{1-x}Hg_xS$, $Cd_{1-x}Hg_xS$, $Zn_{1-y}Ag_{2y}S$, $Cd_{1-x-y}Ag_{2y}Zn_xS$, $Cd_{1-y}Ag_{2y}S$, $Zn_{1-y}Cu_yS$, $Cd_{1-y}Cu_yS$, ZnSe, ZnTe, $ZnS_{1-x}Se_x$, $ZnS_{1-x}Te_x$, $ZnSe_{1-x}Te_x$, CdSe, CdTe $CdS_{1-x}Te_x$, $CdSe_{1-x}Te_x$,

$La_2S_3$ or $Bi_2S_3$, which powder has been coated with 0.001 to 10% by weight of Cu, Cr, Ni, Co or a noble metal or a mixture thereof.

16. A semiconductor powder, according to claim 15, of ZnS, $Cd_{1-x}Zn_xS$, $Cd_{1-x}Hg_xS$, $Cd_{1-y}Ag_{2y}S$ or $Cd_{1-x-y}Ag_{2y}Zn_xS$, in which x is 0.01 to 0.8 and y is 0.001 to 0.2, which powder has been coated with 0.001 to 10% by weight of platinum, iridium, ruthenium, palladium, rhodium or a platinum/silver mixture.

17. A ZnS semiconductor powder, according to claim 15, which powder has been coated with 0.001 to 10% by weight of nickel, iridium or platinum, or a semiconductor powder, according to claim 15, of $Cd_{1-x}Zn_xS$, $Cd_{1-y}Ag_{2y}S$ or $Cd_{1-x-y}Ag_{2y}Zn_xS$, in which x is 0.01 to 0.8, in particular 0.05 to 0.4, and y is 0.001 to 0.2, which powder has been at least partly coated with platinum, ruthenium or a platinum/silver mixture.